(19) Europäisches Patentamt
European Patent Office
Office européen des brevets

(11) **EP 4 151 761 A1**

(12) **EUROPEAN PATENT APPLICATION**
published in accordance with Art. 153(4) EPC

(43) Date of publication:
**22.03.2023 Bulletin 2023/12**

(21) Application number: **21803730.7**

(22) Date of filing: **17.05.2021**

(51) International Patent Classification (IPC):
*C21D 9/32* (2006.01)    *C22C 38/00* (2006.01)
*C22C 38/60* (2006.01)    *C21D 1/06* (2006.01)
*C23C 8/26* (2006.01)    *C23C 8/32* (2006.01)

(52) Cooperative Patent Classification (CPC):
**C21D 1/06; C21D 9/32; C22C 38/00; C22C 38/60;
C23C 8/26; C23C 8/32;** Y02P 10/25

(86) International application number:
**PCT/JP2021/018686**

(87) International publication number:
**WO 2021/230383 (18.11.2021 Gazette 2021/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.05.2020 JP 2020086318
15.05.2020 JP 2020086319**

(71) Applicant: **JFE Steel Corporation
Tokyo 100-0011 (JP)**

(72) Inventors:
• **IHARA, Naoya
Tokyo 100-0011 (JP)**
• **IWAMOTO, Takashi
Tokyo 100-0011 (JP)**
• **NISHIMURA, Kimihiro
Tokyo 100-0011 (JP)**

(74) Representative: **Grünecker Patent- und
Rechtsanwälte
PartG mbB
Leopoldstraße 4
80802 München (DE)**

(54) **STEEL AND STEEL COMPONENT**

(57)    Provided is steel for nitrocarburizing with excellent surface fatigue strength. The steel has a nitride compound layer with a thickness of 5.0 $\mu$m to 30.0 $\mu$m and a hardened layer in an order from a steel surface to steel inside, where a thickness of a porous layer on an outermost surface of the compound layer is 3.0 $\mu$m or less and 40.0 % or less of a compound layer's thickness, the hardened layer has hardness of HV600 or more, HV400 or more and HV250 or more at 50 $\mu$m inward from the steel surface, from the steel surface to the steel inside of 400 $\mu$m, and from the steel surface to the steel inside of 600 $\mu$m, respectively, an unhardened portion excluding the compound and hardened layers has a predetermined chemical composition, and the hardened layer has a chemical composition with a higher N content than the unhardened portion.

EP 4 151 761 A1

*FIG. 2*

```
                    ┌─────────────────┐  ┐
                    │    Melting      │  │
                    └─────────────────┘  │
                             │           │
                    ┌─────────────────┐  │
                    │    Rolling      │  ├ S1
                    └─────────────────┘  │
                             │           │
                    ┌─────────────────┐  │
                    │    Shipping     │  │
                    └─────────────────┘  ┘
                             │
                    ┌─────────────────┐  ┐
                    │  Transporting   │  ├ S2
                    └─────────────────┘  ┘
                             │
                    ┌─────────────────┐  ┐
                    │    Receiving    │  │
                    └─────────────────┘  │
                             │           │
                    ┌─────────────────┐  │
                    │    Cutting      │  │
                    └─────────────────┘  │
                        /         \      │
          ┌──────────────┐    ┌──────────────┐ │
          │ Hot forging  │    │ Cold forging │ ├ S3
          └──────────────┘    └──────────────┘ │
                        \         /      │
                    ┌─────────────────┐  │
                    │  Cutting work   │  │
                    └─────────────────┘  │
                             │           │
                    ┌─────────────────┐  │
                    │ Nitrocarburizing│  │
                    │    treatment    │  │
                    └─────────────────┘  │
                             │           │
                    ┌─────────────────┐  │
                    │    Product      │  │
                    └─────────────────┘  ┘
```

**Description**

TECHNICAL FIELD

This disclosure relates to steel and a steel component, especially to steel and a steel component suitable for use in components for automobiles and construction machinery, which have a compound layer that has been subjected to nitrocarburizing treatment on a surface layer, have excellent fatigue resistance, and have a certain degree of machinability by cutting before nitrocarburizing treatment and good workability to be worked into components.

BACKGROUND

Machine structural components such as automobile gears are required to have excellent fatigue resistance, and therefore such components are usually subjected to surface hardening treatment. Examples of well-known surface hardening treatment include carburizing treatment, induction quench hardening, and nitriding treatment.

Among these, in carburizing treatment, C is immersed and diffused in high-temperature austenite region and a deep hardening depth is obtained. Therefore, carburizing treatment is effective in improving fatigue resistance. However, since carburizing treatment causes heat treatment distortion, it is difficult to apply such treatment to components that require severe dimensional accuracy from the viewpoint of noise or the like.

Further, in induction quench hardening, quenching is performed on a surface layer by high frequency induction heating, which causes heat treatment distortion and leads to problems in dimensional accuracy as in the case with carburizing treatment.

On the other hand, in nitriding treatment, surface hardness is increased by immersing and diffusing nitrogen in a relatively low temperature range equal to or lower than the Aci transformation temperature, which causes little heat treatment distortion such as mentioned above. However, there are problems that the treatment requires a long time of 50 hours to 100 hours, and it is necessary to remove brittle compound layers on the surface layer after the treatment.

Therefore, nitrocarburizing treatment in which treatment is performed at a treatment temperature almost equal to nitriding treatment temperature and in a shorter treatment time has been developed and has been widely used for machine structural components and the like in recent years. In the nitrocarburizing treatment, N and C are simultaneously immersed in a temperature range of 500 °C to 600 °C to form a nitride layer with solute C dissolved therein in the outermost surface, and at the same time, N is diffused into the steel substrate to form a hardened layer to harden the surface. The treatment time of the nitrocarburizing treatment can be reduced to half or less of that of the conventional nitriding treatment.

However, whereas the carburizing treatment enables to increase the core hardness by quench hardening, nitrocarburizing treatment does not increase the core hardness because it is performed at a temperature equal to or lower than the transformation temperature of steel. Therefore, a nitrocarburized material is inferior in fatigue resistance to a carburized material.

Quenching and tempering are usually performed before nitrocarburizing treatment to increase the core hardness, so that the fatigue resistance of a nitrocarburized material can be improved. However, this approach cannot provide sufficient fatigue resistance. Further, this approach increases manufacturing costs and deteriorates mechanical workability.

To solve these problems, JP H05-59488 A (PTL 1) proposes steel for nitrocarburizing which can exhibit good bending fatigue resistance after subjection to nitrocarburizing treatment by adding Ni, Cu, Al, Cr, Ti, and the like to the steel. Regarding this steel, by performing nitrocarburizing treatment, the core part is age hardened by Ni-Al based or Ni-Ti based intermetallic compounds or Cu compounds, while in the surface layer, for example, Cr, Al, Ti nitrides or carbides are precipitated and hardened in the nitride layer, to improve the bending fatigue resistance.

JP 2002-69572 A (PTL 2) proposes steel for nitrocarburizing which obtains excellent bending fatigue resistance after subjection to nitrocarburizing treatment by subjecting steel containing 0.5 % to 2 % of Cu to extend forging by hot forging, and then air cooling the steel so as to have a microstructure mainly composed of ferrite with solute Cu dissolved therein, and then causing precipitation hardening of Cu during nitrocarburizing treatment at 580 °C for 120 minutes and precipitation hardening of carbonitrides of Ti, V and Nb.

JP 2010-163671 A (PTL 3) proposes steel for nitrocarburizing obtained by dispersing Ti-Mo carbides, and further dispersing carbides containing one or more of Nb, V, and W.

JP 6388075 B (PTL 4) proposes to improve the surface fatigue strength by reducing the void ratio of a surface compound layer.

CITATION LIST

Patent Literature

PTL 1: JP H05-59488 A
PTL 2: JP 2002-69572 A
PTL 3: JP 2010-163671 A
PTL 4: JP 6388075 B

SUMMARY

(Technical Problem)

However, although the nitrocarburized steel described in the PTLs 1 to 3 have excellent bending fatigue resistance, they give no consideration to surface fatigue resistance. The technology described in the PTL 4 improves the surface fatigue resistance by improving the compound layer of the outermost surface, but it gives no consideration to the depth of a hardened layer.

It could thus be helpful to provide steel with excellent surface fatigue resistance by appropriately adjusting a compound layer and the depth of a hardened layer, as well as a steel component using the steel.

(Solution to Problem)

To solve the problems, we have diligently studied the optimum compound layer and the optimum depth of a hardened layer. As a result, we found that it is effective to improve the surface fatigue resistance by achieving both an increase in the depth of a hardened layer and suppression of embrittlement of a compound layer.

The present disclosure is based on these findings and further studies. We thus provide the following.

1. Steel comprising a nitride compound layer with a thickness of 5.0 $\mu$m to 30.0 $\mu$m and a hardened layer in an order from a steel surface to steel inside, wherein

a thickness of a porous layer on an outermost surface of the nitride compound layer is 3.0 $\mu$m or less and 40.0 % or less of a thickness of the nitride compound layer,

the hardened layer has a hardness of HV600 or more at a position of 50 $\mu$m inward from the steel surface, a hardness of HV400 or more at a position from the steel surface to the steel inside of 400 $\mu$m, and a hardness of HV250 or more at a position from the steel surface to the steel inside of 600 $\mu$m,

an unhardened portion excluding the nitride compound layer and the hardened layer comprises a chemical composition containing (consisting of), in mass%,

C: 0.010 % or more and 0.200 % or less,
Si: 1.00 % or less,
Mn: 0.50 % or more and 3.00 % or less,
P: 0.020 % or less,
S: 0.020 % or more and 0.060% or less, and
Cr: 0.30 % or more and 3.00 % or less,
with the balance being Fe and inevitable impurities, and

the hardened layer comprises a chemical composition with a high N content compared to the unhardened portion.

2. The steel according to 1., wherein the chemical composition of the unhardened portion further contains, in mass%, at least one selected from the group consisting of

Mo: 0.400 % or less,
V: 0.50 % or less,
Nb: 0.150 % or less,
Al: 0.200 % or less,
W: 0.3 % or less,

Co: 0.3 % or less,
Hf: 0.2 % or less,
Zr: 0.2 % or less,
B: 0.0100 % or less,
Cu: 0.3 % or less,
Ni: 0.3 % or less,
Pb: 0.2 % or less,
Bi: 0.2 % or less,
Zn: 0.2 % or less,
Sn: 0.2 % or less,
Sb: 0.0200 % or less, and
N: 0.0200 % or less.

3. A steel component made of the steel according to 1. or 2.

4. The steel component according to 3., wherein the steel component is a toothed component and has the compound layer at least in a surface layer of a tooth portion.

(Advantageous Effect)

According to the present disclosure, it is possible to provide steel and a steel component with low-cost chemical composition that have excellent mechanical workability before nitrocarburizing treatment and obtains improved surface fatigue strength by nitrocarburizing treatment. Therefore, the steel of the present disclosure is extremely useful as a material for mechanical structural components for automobiles and the like. Further, the steel component of the present disclosure is extremely useful when applied to mechanical structural components for automobiles and the like.

BRIEF DESCRIPTION OF THE DRAWINGS

In the accompanying drawings:

FIG. 1 illustrates a roller pitching test piece; and
FIG. 2 illustrates typical manufacturing processes of a nitrocarburized component.

DETAILED DESCRIPTION

The following describes the present disclosure in detail.

The steel of the present disclosure has a nitride compound layer with a thickness of 5.0 $\mu$m to 30.0 $\mu$m and a hardened layer in an order from a steel surface to steel inside, where a thickness of a porous layer on an outermost surface of the nitride compound layer is 3.0 $\mu$m or less and 40.0 % or less of a thickness of the nitride compound layer, and the hardened layer has a hardness of HV600 or more at a position of 50 $\mu$m inward from the steel surface, a hardness of HV400 or more at a position from the steel surface to the steel inside of 400 $\mu$m, and a hardness of HV250 or more at a position from the steel surface to the steel inside of 600 $\mu$m.

First, the reasons for limiting the thickness of the nitride compound layer and the porous layer and the hardness distribution of the hardened layer of the steel of the present disclosure to the above-described ranges are explained.

Thickness of nitride compound layer containing nitride compound: 5.0 $\mu$m to 30.0 $\mu$m

The nitride compound layer (hereafter may be referred to as "compound layer") has an extremely high hardness and contributes to improving the surface fatigue resistance of a steel component. A too thin nitride compound layer leads to early exposure of steel substrate of a steel component due to wearing, which decreases the fatigue strength improving effect. Therefore, the thickness of the nitride compound layer is set to 5.0 $\mu$m or more. It is preferably 6.0 $\mu$m or more. It is more preferably 10.0 $\mu$m or more.

On the other hand, a too thick nitride compound layer renders it difficult to suppress the formation of the porous layer described below. Therefore, the thickness of the nitride compound layer is set to 30.0 $\mu$m or less. It is preferably 25.0 $\mu$m or less.

Thickness of porous layer: 40.0 % or less of the thickness of the nitride compound layer and 3.0 $\mu$m or less

The porous layer is an aggregate of minute pores inevitably formed in the outermost surface of the compound layer by nitrocarburizing. Since the presence of the porous layer adversely affects the fatigue strength, it is desirable to make it as thin as possible. When the thickness of the porous layer exceeds 3.0 $\mu$m or exceeds 40.0 % of the thickness of the nitride compound layer, the expected improvement in fatigue resistance due to the formation of the nitride compound layer cannot be sufficiently achieved. Therefore, the thickness of the porous layer needs to be 40.0 % or less of the thickness of the nitride compound layer and 3.0 $\mu$m or less. It may be even 0.

The thickness of the porous layer in the present disclosure is measured with the method described in the EXAMPLES section below.

Depth of hardened layer: a hardness of HV600 or more at a position of 50 $\mu$m inward from the steel surface, a hardness of HV400 or more at a position from the steel surface to the steel inside of 400 $\mu$m, and a hardness of HV250 or more at a position from the steel surface to the steel inside of 600 $\mu$m

It is known that there is a correlation between material hardness and fatigue strength (see, for example, "MatNavi, JIS Steel for Machine Structural Use, Mechanical Properties and Fatigue Properties of Chromium Steel and Chromium Molybdenum Steel"). In other words, a desired fatigue strength can be obtained if there is sufficient hardness, regardless of the composition.

When a steel component has a slipping contact, two types of forces are applied to the steel component. One is the shear stress due to the tangential forces, which is maximized at the surface. The other is the shear stress due to the perpendicular reaction force, which is maximized at deeper positions. The hardness distribution is set to exhibit excellent fatigue resistance against these two types of forces.

In particular, the shear stress due to the perpendicular reaction force tends to be a problem for nitrocarburized steel with a thin hardened layer. The shear stress distribution due to the perpendicular reaction force when the teeth, cylinders, and spheres of a gear are brought into contact with each other can be expressed by the following equation. As used herein, z is the depth, P(z) is the shear stress at depth z, Pmax is the maximum contact stress, and b is the osculating ellipse minor axis length.

$$P(z) = P_{max} \times \left( \frac{z}{b} - \frac{z^2}{b \times \sqrt{b^2 + z^2}} \right)$$

Although it depends on the shape of the steel component and the load applied thereon, the shear stress has a maximum value at a depth of 400 $\mu$m in many cases, which may serve as an initiation point of fracture. Therefore, the hardness distribution is set as described above.

Although the nitride compound layer is formed after the subjection of the steel to nitrocarburizing treatment, N diffuses inward from the compound layer due to the nitrocarburizing treatment. As a result, this N diffusion layer becomes a hardened layer. By adjusting the N concentration by diffusion, the hardness of the hardened layer can be adjusted as described above.

The thicknesses of the compound layer and the porous layer and the hardness distribution of the hardened layer have been described above. In the present disclosure, an unhardened portion, which is a portion other than the above-described compound layer and hardened layer, has a chemical composition containing, in mass%, C: 0.010 % or more and 0.200 % or less, Si: 1.00 % or less, Mn: 0.50 % or more and 3.00 % or less, P: 0.020 % or less, S: 0.020 % or more and 0.060% or less, and Cr: 0.30 % or more and 3.00 % or less, with the balance being Fe and inevitable impurities, or a chemical composition further containing, as an optional component, at least one selected from the group consisting of Mo: 0.400 % or less, V: 0.50 % or less, Nb: 0.150 % or less, Al: 0.200 % or less, W: 0.3 % or less, Co: 0.3 % or less, Hf: 0.2 % or less, Zr: 0.2 % or less, B: 0.0100 % or less, Cu: 0.3 % or less, Ni: 0.3 % or less, Pb: 0.2 % or less, Bi: 0.2 % or less, Zn: 0.2 % or less, Sn: 0.2 % or less, Sb: 0.0200 % or less, and N: 0.0200 % or less.

The following describes the reasons for limiting the chemical composition of the unhardened portion to the above-described ranges in the present disclosure. The % representations below indicating the chemical composition are in mass% unless stated otherwise.

C: 0.010 % or more and 0.200 % or less

C is necessary for securing the strength of the unhardened portion and the hardened layer. When the C content is less than 0.010 %, the strength of the unhardened and the hardness of the hardened layer are lowered. The hardened layer can be formed by performing nitrocarburizing treatment as described below, and the hardened layer is formed by increasing the N concentration with respect to the chemical composition of a material before nitrocarburizing treatment. The unhardened portion, which is a portion other than the hardened layer, maintains the chemical composition of the material before nitrocarburizing except for N. Therefore, the C content is set to 0.010 % or more for the purpose of strengthening the unhardened portion and the hardened layer. The C content is more preferably 0.050 % or more. On the other hand, when the C content exceeds 0.200 %, the mechanical workability deteriorates. Therefore, the C content is set to a range of 0.200 % or less. The C content is more preferably in a range of 0.100 % or less.

Si: 1.00 % or less

Si is effective in guaranteeing strength. However, when the Si content exceeds 1.00 %, the mechanical workability is deteriorated by solid solution strengthening. Therefore, the Si content is set to 1.00 % or less. The Si content is more preferably 0.50 % or less. From the viewpoint of ensuring the strength of the steel, the Si content is preferably 0.005 % or more.

Mn: 0.50 % or more and 3.00 % or less

Mn enhances the machinability by cutting by forming MnS with S. When the Mn content is less than 0.50 %, the amount of MnS formed is insufficient, which deteriorates the machinability by cutting. Therefore, the Mn content is set to 0.50 % or more. It is preferably 1.50 % or more. On the other hand, when the Mn content exceeds 3.00 %, the hardness is increased, and the mechanical workability is deteriorated. Therefore, the Mn content is set to 3.00 % or less. It is preferably 2.50 % or less. It is more preferably in a range of 2.00 % or less.

P: 0.020 % or less

P is an element mixed in steel as an impurity, and it is known to cause surface cracks in cast steel. Therefore, the P content is preferably kept as low as possible, but a content of up to 0.020 % is tolerable. Note that setting the P content to less than 0.001 % requires a high cost. Therefore, it suffices in industrial terms to reduce the P content to 0.001 %.

S: 0.020 % or more and 0.060 % or less

S is an element mixed in steel as an impurity, but on the other hand, it contributes to enhancing the machinability. That is, when the S content is less than 0.020 %, the amount of MnS formed in the steel decreases, resulting in deterioration of machinability. On the other hand, when the S content exceeds 0.060 %, not only does the effect saturate, but also the amount of solute Mn is reduced by the amount excessively precipitated as MnS. Therefore, the S content is limited to 0.060 % or less. It is preferably 0.040 % or less.

Cr: 0.30 % or more and 3.00 % or less

Cr forms CrN with N diffused from the surface during nitriding, thereby strengthening the hardened layer by precipitation. The hardened layer can be formed by performing nitrocarburizing treatment as described below, and the hardened layer is formed by increasing the N concentration with respect to the chemical composition of a material before nitrocarburizing treatment. The unhardened portion, which is a portion other than the hardened layer, maintains the chemical composition of the material before nitrocarburizing except for N. Therefore, although the purpose is to strengthen the hardened layer by precipitation, the Cr content is set to 0.30 % or more for the unhardened portion. When the Cr content is less than 0.30 %, the amount of CrN that precipitates in the hardened layer during nitriding treatment is insufficient, rendering it difficult to secure the strength. Therefore, the Cr content is set to 0.30 % or more. On the other hand, when the Cr content exceeds 3.00 %, the hardness is increased, and the machinability by cutting is deteriorated. Therefore, the Cr content is set to 3.00 % or less. It is preferably 0.50 % or more. It is preferably 1.50 % or less.
In addition to the elements described above, at least one of the following elements may be optionally contained. Elements that can be optionally contained and the upper limits of their contents are described below.

Mo: 0.400 % or less

Mo forms nitrides with nitrogen diffused from the surface layer during nitrocarburizing and contributes to increasing the hardness of the surface layer. Mo also forms bainite and contributes to increasing the machinability by cutting and the core hardness. On the other hand, because Mo is an expensive element, excessive addition of Mo results in an increase in component costs. Therefore, the Mo content is set to 0.400 % or less. It is preferably 0.150 % or less.

V: 0.50 % or less

V forms nitrides with nitrogen diffused from the surface layer during nitrocarburizing and contributes to increasing the hardness of the surface layer. Further, V forms fine precipitates due to temperature rise during nitrocarburizing and increases the core hardness. On the other hand, excessive addition leads to coarsening of precipitates and saturation of the strength improving effect. Further, the hardness after hot forging is increased, and the machinability is deteriorated.

Therefore, the V content is set to 0.50 % or less. It is preferably 0.40 % or less.

Nb: 0.150 % or less

Nb forms nitrides with nitrogen diffused from the surface layer during nitrocarburizing and contributes to increasing the hardness of the surface layer. Further, Nb forms fine precipitates due to temperature rise during nitrocarburizing and increases the core hardness. On the other hand, excessive addition leads to coarsening of precipitates and saturation of the strength improving effect. Further, the hardness after hot forging is increased, and the machinability is deteriorated. Therefore, the Nb content is set to 0.150 % or less. It is preferably 0.120 % or less.

Al: 0.200 % or less

Al is an element useful for improving the surface layer hardness after nitrocarburizing treatment. On the other hand, when the Al content exceeds 0.200 %, the depth of the hardened layer decreases. Therefore, the Al content is set to 0.200 % or less. It is preferably 0.100 % or less. It is more preferably 0.040 % or less.

W: 0.3 % or less

W is an element effective in further improving the strength of the steel. However, when the W content exceeds 0.3 %, the toughness of the steel deteriorates. Therefore, when W is added, the W content is set to 0.3 % or less. It is preferably 0.25 % or less. On the other hand, although the lower limit of the W content is not particularly limited, the W content is preferably 0.01 % or more.

Co: 0.3 % or less

Co is an element effective in further improving the strength of the steel. However, when the Co content exceeds 0.3 %, the toughness of the steel deteriorates. Therefore, when Co is added, the Co content is set to 0.3 % or less. It is preferably 0.25 % or less. On the other hand, although the lower limit of the Co content is not particularly limited, the Co content is preferably 0.01 % or more.

Hf: 0.2 % or less

Hf is an element effective in further improving the strength of the steel. However, when the Hf content exceeds 0.2 %, the toughness of the steel deteriorates. Therefore, when Hf is added, the Hf content is set to 0.2 % or less. It is preferably 0.15 % or less. On the other hand, although the lower limit of the Hf content is not particularly limited, the Hf content is preferably 0.01 % or more.

Zr: 0.2 % or less

Zr is an element effective in further improving the strength of the steel. However, when the Zr content exceeds 0.2 %, the toughness of the steel deteriorates. Therefore, when Zr is added, the Zr content is set to 0.2 % or less. It is preferably 0.15 % or less. On the other hand, although the lower limit of the Zr content is not particularly limited, the Zr content is preferably 0.01 % or more.

B: 0.0100 % or less

B has an effect of improving the hardenability and promoting the formation of bainitic microstructure. However, when the B content exceeds 0.0100 %, B precipitates as BN, which not only saturates the hardenability improving effect but also increases the component costs. Therefore, when B is added, the B content is set to 0.0100 % or less. It is more preferably 0.0080% or less. On the other hand, although the lower limit of the B content is not particularly limited, the B content is preferably 0.0003 % or more. It is more preferably 0.0005 % or more.

Cu: 0.3% or less

Cu has an effect of forming an intermetallic compound with Fe and Ni during nitrocarburizing treatment and increasing the strength of the nitrocarburized material by precipitation hardening. Cu also contributes to the formation of bainite. However, when the Cu content exceeds 0.3 %, the hot workability deteriorates. Therefore, when Cu is added, the Cu content is set to 0.3 % or less. It is preferably 0.25 % or less. On the other hand, although the lower limit of the Cu content is not particularly limited, the Co content is preferably 0.05 % or more.

Ni: 0.3 % or less

Ni has an effect of increasing the hardenability and suppressing the low-temperature brittleness. However, when the Ni content exceeds 0.3 %, the hardness increases, which not only adversely affects the machinability by cutting but also is disadvantageous in terms of cost. Therefore, when Ni is added, the Ni content is set to 0.3 % or less. It is preferably 0.25 % or less. On the other hand, although the lower limit of the Ni content is not particularly limited, the Ni content is preferably 0.05 % or more.

Pb: 0.2 % or less

Pb has an effect of improving the machinability by cutting of the steel. However, when the Pb content exceeds 0.2 %, the toughness deteriorates. Therefore, when Pb is added, the Pb content is set to 0.2 % or less. It is preferably 0.1 % or less. On the other hand, although the lower limit of the Pb content is not particularly limited, the Pb content is preferably 0.02 % or more.

Bi: 0.2 % or less

Bi has an effect of improving the machinability by cutting of the steel. However, when the Bi content exceeds 0.2 %, the toughness deteriorates. Therefore, when Bi is added, the Bi content is set to 0.2 % or less. It is preferably 0.1 % or less. On the other hand, although the lower limit of the Bi content is not particularly limited, the Bi content is preferably 0.02 % or more.

Zn: 0.2 % or less

Zn has an effect of improving the machinability by cutting of the steel. However, when the Zn content exceeds 0.2 %, the toughness deteriorates. Therefore, when Zn is added, the Zn content is set to 0.2 % or less. It is preferably 0.1 % or less. On the other hand, although the lower limit of the Zn content is not particularly limited, the Zn content is preferably 0.02 % or more.

Sn: 0.2 % or less

Sn has an effect of improving the machinability by cutting of the steel. However, when the Sn content exceeds 0.2 %, the toughness deteriorates. Therefore, when Sn is added, the Sn content is set to 0.2 % or less. It is preferably 0.1 % or less. On the other hand, although the lower limit of the Sn content is not particularly limited, the Sn content is preferably 0.02 % or more.

Sb: 0.0200 % or less

Sb has an effect of promoting the formation of bainite and increasing the hardness. To obtain this effect, the Sb content is preferably 0.0005 % or more. It is more preferably 0.0010 % or more. However, when the Sb content exceeds 0.0200 %, the effect is saturated, the component costs are increased, and the toughness of base metal is deteriorated due to segregation. Therefore, when Sb is added, the Sb content is set to 0.0200 % or less. It is preferably 0.0100 % or less.

N: 0.0200 % or less

N has an effect of forming carbonitrides in the steel and increasing the strength. However, when the N content exceeds 0.0200 %, the hardness after hot forging increases, and the machinability by cutting deteriorates. Therefore, the N content is set to 0.0200 % or less. On the other hand, although the lower limit of the N content is not particularly limited, the N content is preferably 0.0020 % or more from the viewpoint of increasing the strength.

Fe and inevitable impurities is the balance other than the above-described elements in the chemical composition of the unhardened portion of the steel of the present disclosure. The following describes the chemical composition of the hardened layer of the steel of the present disclosure.

The hardened layer is formed during the nitrocarburizing treatment and is formed by the diffusion of nitrogen in the nitrocarburizing atmosphere into the steel. On the outermost surface of the steel, Fe, which is the main component of the steel to be subjected to nitrocarburizing treatment, and other components combine with nitrogen to form nitrides, thereby forming the above-described compound layer composed of the nitrides. C in the nitrocarburizing atmosphere also diffuses into the compound layer. The hardened layer is a layer in which nitrogen diffuses into the steel to obtain a nitrogen concentration higher than before the nitrocarburizing treatment, and the hardened layer is formed adjacent to the inside of the compound layer. The unhardened portion is a portion where the diffusion of nitrogen has not occurred, and therefore the chemical composition of the unhardened portion is as described above. On the other hand, the hardened layer has a chemical composition with a high N content compared to the chemical composition of the unhardened portion.

The steel of the present disclosure has been described. The steel component of the present disclosure is directed to a component in which the steel of the present disclosure is shaped into a wide variety of components, preferably into a component for machine structural use. The steel component of the present disclosure is particularly preferably a toothed component such as a gear, in which the above-described compound layer is preferably formed at least in a surface layer of a tooth portion. The tooth portion of a toothed component such as a gear is a portion that has a slipping contact and that requires excellent surface fatigue strength. When the nitride compound layer and the hardened layer are formed in the tooth portion, the durability as a toothed component can be ensured.

Not only for a toothed component but also for steel components with a potion having a slipping contact, the surface fatigue of this portion is important for ensuring the durability of the component. Therefore, by forming the nitride compound layer and the hardened phase in such a portion, it is possible to obtain a durability improving effect. For this reason, the steel component of the present disclosure is not limited to a toothed component.

The following describes a method of manufacturing the steel and the steel component of the present disclosure.

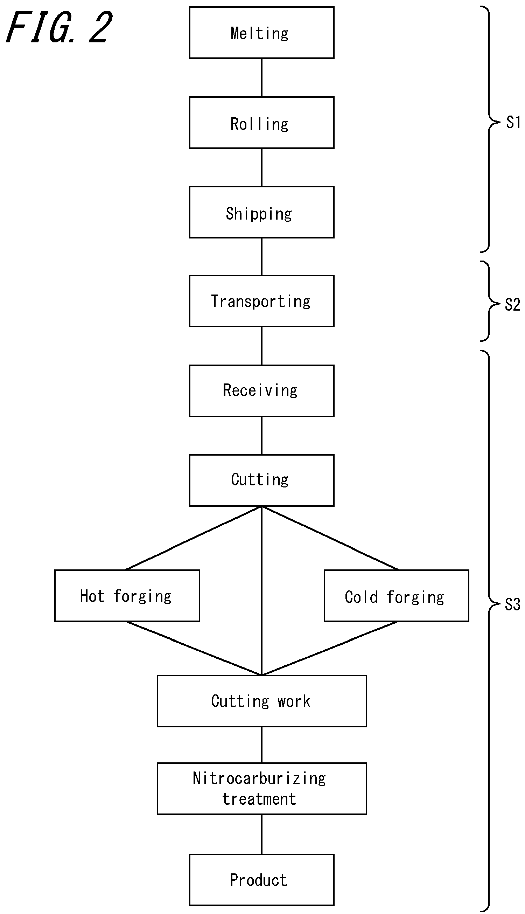

FIG. 2 illustrates typical manufacturing processes for manufacturing a nitrocarburized component using steel for nitrocarburizing (steel bar). In the figure, S 1 is a process of manufacturing a steel bar (steel for nitrocarburizing) which is a raw material, S2 is a process of transporting the steel bar, and S3 is a process of manufacturing a component (which is a nitrocarburized component and includes nitrocarburized steel).

First, in the steel bar manufacturing process (S1), a steel ingot is subjected to hot rolling and/or hot forging to obtain a steel bar, and after quality inspection, the steel bar is shipped. After being transported (S2), the steel bar is cut into predetermined dimensions, subjected to hot forging or cold forging, formed into a desired shape (such as the shape of a gear product or a shaft product) by cutting work such as drill boring or lathe turning as necessary, and then subjected to nitrocarburizing treatment to obtain a product in the nitrocarburized component finish process (S3).

Alternatively, the hot rolled material may be directly subjected to cutting work such as lathe turning or drill boring to obtain a desired shape and then subjected to nitrocarburizing treatment to obtain a product. In the case of hot forging, there are cases where cold straightening is performed after hot forging. In addition, the final product may be subjected to coating treatment such as painting or plating.

Next, the obtained rolled material or forged material is subjected to cutting work to obtain the shape of the component, and then subjected to nitrocarburizing treatment. This nitrocarburizing treatment produces a compound layer containing a compound formed by the combination of nitrogen in the atmosphere and the component elements of the steel on the surface layer, and produces a hardened layer containing a nitrogen (N) diffusion layer inside the compound layer.

In this series of manufacturing processes, to obtain the steel or the steel component of the present disclosure, steel with the chemical composition for the unhardened portion described above is used as steel to be used as a raw material for hot rolling and/or hot forging in the steel bar manufacturing process of S1. For the hardened layer, to obtain the above-described depth in the hardened layer, it is necessary to set the nitrocarburizing temperature to 550 °C to 590 °C and the nitrocarburizing time to at least 10 hours in the process of performing nitrocarburizing treatment. On the other hand, when the nitrocarburizing time is such a long time, it is necessary to prevent the excessive growth of the compound layer and the porous layer and the deterioration of the fatigue strength. As the nitriding potential of the atmosphere during the nitrocarburizing decreases, the thickness of the porous layer decreases. Therefore, it is necessary to obtain the relationship between the nitriding potential and the porous layer thickness in advance for each standard or component of the steel used as the raw material and to adopt a nitriding potential that can achieve the porous layer thickness specified in the present disclosure.

In the nitrocarburizing treatment, N and C are simultaneously immersed into the steel to form a nitride compound layer with solute C dissolved therein, and N is diffused into the steel substrate. Therefore, the nitrocarburizing treatment may be performed in a mixed atmosphere of nitrogenous gas such as $NH_3$ and $N_2$ and carburizing gas such as $CO_2$ and CO, such as an atmosphere of $NH_3$: $N_2$: $CO_2$ = 50: 45: 5.

The steel of the present disclosure or a steel component made of the steel can be obtained with the above manufacturing processes.

EXAMPLES

The following describes examples of the present disclosure in detail.

Steel having the composition listed in Tables 1-1 and 1-2 was made into cast steel with a cross section of 300 mm × 400 mm using a continuous casting machine. The cast steel was subjected to soaking at 1250 °C for 30 minutes and then hot rolled into a billet having a rectangular cross section with a side of 140 mm. Further, the billet was subjected to hot rolling to obtain an 80 mmφ steel bar (raw material as hot rolled). The steel bar was held at 1200 °C for one hour and then subjected to hot forging to obtain a smaller 35 mmφ steel bar.

Table 1-1

| Steel sample No. | C | Si | Mn | P | S | Cr | Others | Classification |
|---|---|---|---|---|---|---|---|---|
| | | | | | | | | (mass%) |
| 1 | 0.135 | 0.20 | 1.75 | 0.014 | 0.031 | 0.63 | - | Conforming example |
| 2 | 0.121 | 0.30 | 1.45 | 0.012 | 0.050 | 1.37 | - | Conforming example |
| 3 | 0.195 | 0.25 | 2.42 | 0.012 | 0.040 | 1.98 | - | Conforming example |
| 4 | 0.061 | 0.35 | 1.65 | 0.015 | 0.042 | 1.99 | - | Conforming example |
| 5 | 0.079 | 0.61 | 1.75 | 0.010 | 0.059 | 1.39 | - | Conforming example |
| 6 | 0.134 | 0.37 | 1.76 | 0.012 | 0.043 | 1.70 | N:0.0125 | Conforming example |
| 7 | 0.162 | 0.59 | 1.55 | 0.008 | 0.060 | 1.22 | Mo:0.100 | Conforming example |
| 8 | 0.091 | 0.29 | 1.76 | 0.012 | 0.043 | 0.59 | V:0.20 | Conforming example |
| 9 | 0.143 | 0.24 | 1.64 | 0.008 | 0.049 | 1.11 | Nb:0.12 | Conforming example |
| 10 | 0.186 | 0.31 | 1.82 | 0.010 | 0.059 | 1.39 | Al:0.053 | Conforming example |
| 11 | 0.110 | 0.24 | 1.77 | 0.012 | 0.034 | 0.45 | B:0.0005 | Conforming example |
| 12 | 0.060 | 0.39 | 1.69 | 0.008 | 0.049 | 0.44 | Cu:0.1 | Conforming example |
| 13 | 0.073 | 0.36 | 2.26 | 0.015 | 0.043 | 0.37 | Cu:0.1, Ni:0.15 | Conforming example |
| 14 | 0.068 | 0.31 | 1.69 | 0.018 | 0.041 | 1.99 | W:0.2 | Conforming example |
| 15 | 0.090 | 0.17 | 1.85 | 0.012 | 0.034 | 2.31 | Co:0.3 | Conforming example |
| 16 | 0.121 | 0.16 | 1.51 | 0.010 | 0.044 | 2.27 | Hf:0.2, Zr:0.2 | Conforming example |
| 17 | 0.133 | 0.20 | 1.98 | 0.015 | 0.046 | 0.54 | Pb:0.1 | Conforming example |
| 18 | 0.088 | 0.30 | 1.86 | 0.013 | 0.058 | 0.49 | Bi:0.2 | Conforming example |
| 19 | 0.197 | 0.60 | 1.75 | 0.010 | 0.059 | 0.63 | Zn:0.2 | Conforming example |
| 20 | 0.192 | 0.37 | 1.54 | 0.012 | 0.054 | 0.69 | Sn:0.2 | Conforming example |
| 21 | 0.073 | 0.19 | 2.98 | 0.009 | 0.045 | 0.65 | Sb:0.0121 | Conforming example |

Table 1-2

| Steel sample No. | C | Si | Mn | P | S | Cr | Others | Classification |
|---|---|---|---|---|---|---|---|---|
| | | | | | | | | (mass%) |
| 22 | 0.009 | 0.16 | 2.12 | 0.013 | 0.023 | 0.49 | - | Comparative example |
| 23 | 0.213 | 0.17 | 1.65 | 0.014 | 0.060 | 0.66 | - | Comparative example |
| 24 | 0.051 | 1.03 | 1.65 | 0.012 | 0.060 | 0.55 | - | Comparative example |
| 25 | 0.053 | 0.25 | 0.48 | 0.013 | 0.033 | 0.45 | - | Comparative example |
| 26 | 0.061 | 0.17 | 3.24 | 0.018 | 0.025 | 0.36 | - | Comparative example |
| 27 | 0.134 | 0.15 | 2.00 | 0.017 | 0.019 | 0.61 | - | Comparative example |
| 28 | 0.139 | 0.31 | 1.61 | 0.018 | 0.060 | 0.25 | - | Comparative example |
| 29 | 0.090 | 0.23 | 1.61 | 0.018 | 0.043 | 3.05 | - | Comparative example |

(continued)

| | | | | | | | | (mass%) |
|---|---|---|---|---|---|---|---|---|
| Steel sample No. | C | Si | Mn | P | S | Cr | Others | Classification |
| 30 | 0.206 | 0.33 | 0.81 | 0.014 | 0.021 | 1.15 | - | Conventional example |

* 1 Underline indicates outside the scope of application.

The machinability by cutting (tool life) of the hot-forged material thus obtained was evaluated with an outer periphery turning test. A hot-rolled raw material or a hot-forged material cut into a length of 200 mm was used as a test material. As cutting tools, CSBNR 2020 manufactured by Mitsubishi Materials Corporation was used as a folder, and SNGN 120408 UTi20 highspeed tool steel manufactured by Mitsubishi Materials Corporation was used for a tip. The conditions of the outer periphery turning test were as follows: cut depth 1.0 mm, feed rate 0.25 mm/rev, cutting speed 200 m/min, and YUSHIROKEN was used as a lubricant. For an evaluation item, the tool life was defined as the time until the tool wear (flank wear) reached 0.2 mm.

The hot-rolled raw material or hot-forged material was subjected to hardness measurement. A test piece for evaluation was collected from the center (core) of the obtained hot-rolled raw material or hot-forged material. In the hardness measurement, the hardness at a 1/4 radial position was measured with a test load of 2.94 N (300 gf) at five points in accordance with JIS Z 2244 using a Vickers hardness meter, and the average value of the five points was defined as hardness HV.

The measurement results are listed in Table 2.

Table 2

| Steel sample No. | Steel properties (before nitrocarburizing treatment) | | Remarks |
|---|---|---|---|
| | Core hardness HV | Tool life (s) | |
| 1 | 249 | 1362 | Example |
| 2 | 276 | 1545 | Example |
| 3 | 264 | 2260 | Example |
| 4 | 280 | 2279 | Example |
| 5 | 275 | 2023 | Example |
| 6 | 283 | 1743 | Example |
| 7 | 278 | 1946 | Example |
| 8 | 275 | 1638 | Example |
| 9 | 244 | 2267 | Example |
| 10 | 286 | 1438 | Example |
| 11 | 276 | 1492 | Example |
| 12 | 268 | 2160 | Example |
| 13 | 283 | 2310 | Example |
| 14 | 274 | 2159 | Example |
| 15 | 294 | 2221 | Example |
| 16 | 265 | 2295 | Example |
| 17 | 247 | 2047 | Example |
| 18 | 270 | 1415 | Example |
| 19 | 267 | 1429 | Example |
| 20 | 246 | 1840 | Example |
| 21 | 258 | 2152 | Example |

(continued)

| Steel sample No. | Steel properties (before nitrocarburizing treatment) | | Remarks |
|---|---|---|---|
| | Core hardness HV | Tool life (s) | |
| 22 | 179 | 1653 | Comparative example |
| 23 | 310 | 535 | Comparative example |
| 24 | 310 | 915 | Comparative example |
| 25 | 254 | 737 | Comparative example |
| 26 | 308 | 1023 | Comparative example |
| 27 | 243 | 734 | Comparative example |
| 28 | 278 | 1291 | Comparative example |
| 29 | 310 | 910 | Comparative example |
| 30 | 220 | 1261 | Conventional example |
| * 1 Underline indicates outside the scope of application. | | | |

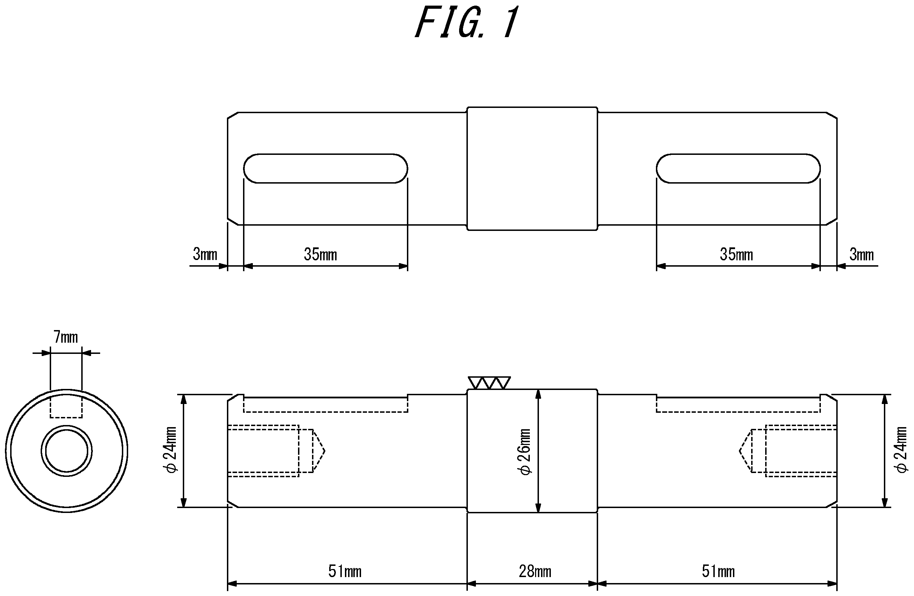

Further, a roller-pitching test piece as illustrated in FIG. 1 was collected from the hot-forged material parallel to the longitudinal direction, and the test piece was subjected to nitrocarburizing treatment. To obtain the desired compound layer and hardness distribution, the nitrocarburizing temperature, time, and nitriding potential were adjusted appropriately. For comparison, the hot-forged material of steel sample No. 30 was carburized at 930 °C for 3 hours, held at 850 °C for 40 minutes, then subjected to oil quenching, and further tempered at 170 °C for 1 hour for carburizing-quenching-tempering (No. 47).

The materials thus obtained by being subjected to nitrocarburizing treatment or carburizing-quenching and tempering were further subjected to hardness measurement, compound layer/porous layer thickness measurement, and fatigue resistance evaluation. The measurement results and evaluation results are listed in Table 3 (Tables 3-1 and 3-2).

The hardness was measured at each position of 50 $\mu$m, 400 $\mu$m, and 1250 $\mu$m from the surface of a cross section of the material after nitrocarburizing treatment or carburizing-quenching and tempering. The hardness was measured using a Vickers hardness meter at six points with a test load of 2.94 N (300 gf) in accordance with JIS Z2244, and the average value of the results was determined.

The thickness of the compound layer and the thickness of the porous layer were measured on a cross section of the nitrocarburized material. The steel was corroded with 3 % nital solution, and the surface layer was observed using an optical microscopy for three observation fields at 1000 magnifications to identify the uncorroded compound layer. The value of the maximum compound layer thickness in the three observation fields was measured as the thickness of the compound layer. Regarding the porous layer, the thickness of the thickest location of an aggregate of minute pores existing continuously from the surface in the depth direction was measured in each of the three observation fields, and the maximum value among the results was taken as the thickness of the porous layer.

The fatigue resistance evaluation was performed using a roller pitching test piece (see FIG. 1) that had been subjected to nitrocarburizing treatment or carburizing-quenching and tempering but had not been subjected to any of microstructure observation, hardness measurement and precipitate observation, and the fatigue limit strength of the roller pitching test piece was determined by creating an S-N diagram using RPT-201 manufactured by Nikko Create. The fatigue limit strength was defined as the maximum stress at which the test continued over $10^7$ times with N = 2 or more. In the roller pitching test, the slip rate was 40 %, automatic transmission oil (Mitsubishi ATF SP-III) was used as a lubricating oil, and the oil temperature was 80 °C. The rotational speed during the test was 2000 rpm. A carburized and quenched SCM420H with a crowning R of 300 mm was used as a large roller in contact with the transporting surface.

Table 3-1

| No. | Steel sample No. | Properties (after nitrocarburizing treatment) | | | | | | | Remarks |
|---|---|---|---|---|---|---|---|---|---|
| | | Compound layer thickness ($\mu$m) | Porous layer thickness ($\mu$m) | Ratio of porous layer thickness to compound layer thickness (%) | Hardness HV at 50 $\mu$m | Hardness HV at 400 $\mu$m | Hardness HV at 600 $\mu$m | Fatigue limit strength (MPa) | |
| 1 | 1 | 5.3 | 1.1 | 20.8 | 716 | 705 | 253 | 2450 | Example |
| 2 | 2 | 5.9 | 1.8 | 30.5 | 713 | 622 | 285 | 2550 | Example |
| 3 | 3 | 6.4 | 1.3 | 203 | 726 | 674 | 267 | 2600 | Example |
| 4 | 4 | 5.5 | 1.1 | 200 | 730 | 663 | 280 | 2600 | Example |
| 5 | 5 | 10.3 | 2.8 | 27.2 | 775 | 620 | 264 | 2600 | Example |
| 6 | 6 | 7.6 | 1.9 | 25.0 | 715 | 693 | 285 | 2650 | Example |
| 7 | 7 | 6.2 | 1.5 | 24.2 | 703 | 430 | 255 | 2500 | Example |
| 8 | 8 | 6.5 | 0.9 | 13.8 | 717 | 617 | 284 | 2550 | Example |
| 9 | 9 | 5.2 | 1.2 | 23.1 | 720 | 681 | 252 | 2450 | Example |
| 10 | 10 | 7.7 | 1.2 | 156 | 723 | 655 | 291 | 2550 | Example |
| 11 | 11 | 9.2 | 1.3 | 14.1 | 743 | 740 | 281 | 2550 | Example |
| 12 | 12 | 6.5 | 1.5 | 23.1 | 726 | 707 | 277 | 2500 | Example |
| 13 | 13 | 5.4 | 1.1 | 20.4 | 721 | 640 | 290 | 2700 | Example |
| 14 | 14 | 6.6 | 1.0 | 15.2 | 712 | 664 | 275 | 2650 | Example |
| 15 | 15 | 5.6 | 1.3 | 23.2 | 734 | 707 | 296 | 2450 | Example |
| 16 | 16 | 12.3 | 1.5 | 12.2 | 715 | 700 | 273 | 2500 | Example |
| 17 | 17 | 13.5 | 2.2 | 16.3 | 680 | 532 | 260 | 2500 | Example |
| 18 | 18 | 13.2 | 1.9 | 14.4 | 675 | 522 | 253 | 2450 | Example |
| 19 | 19 | 10.3 | 2.2 | 21.4 | 632 | 501 | 253 | 2450 | Example |
| 20 | 20 | 7.8 | 1.4 | 179 | 725 | 691 | 256 | 2500 | Example |
| 21 | 21 | 5.8 | 1.6 | 27.6 | 721 | 693 | 265 | 2500 | Example |
| 22 | 1 | 25.4 | 2.6 | 10.2 | 723 | 634 | 286 | 2500 | Example |
| 23 | 1 | 28.2 | 27 | 9.6 | 719 | 631 | 256 | 2700 | Example |

(continued)

| No. | Steel sample No. | Properties (after nitrocarburizing treatment) | | | | | | | Remarks |
|---|---|---|---|---|---|---|---|---|---|
| | | Compound layer thickness ($\mu$m) | Porous layer thickness ($\mu$m) | Ratio of porous layer thickness to compound layer thickness (%) | Hardness HV at 50 $\mu$m | Hardness HV at 400 $\mu$m | Hardness HV at 600 $\mu$m | Fatigue limit strength (MPa) | |
| 24 | 1 | 12.1 | 2.8 | 23.1 | 613 | 576 | 252 | 2450 | Example |
| 25 | 1 | 8.2 | 2.7 | 32.9 | 723 | 666 | 266 | 2450 | Example |

Table 3-2

| No. | Steel sample No. | Compound layer thickness (μm) | Porous layer thickness (μm) | Ratio of porous layer thickness to compound layer thickness (%) | Hardness HV at 50 μm | Hardness HV at 400 μm | Hardness HV at 600 μm | Fatigue limit strength (MPa) | Remarks |
|---|---|---|---|---|---|---|---|---|---|
| | | | | Properties (after nitrocarburizing treatment) | | | | | |
| 26 | 1 | 0.9 | 0.2 | 22.2 | 735 | 664 | 265 | 2000 | Comparative example |
| 27 | 1 | 1.2 | 0.2 | 16.7 | 732 | 651 | 266 | 2200 | Comparative example |
| 28 | 1 | 4.6 | 2.2 | 47.8 | 731 | 685 | 275 | 2200 | Comparative example |
| 29 | 4 | 3.7 | 1.0 | 27.0 | 731 | 649 | 282 | 2300 | Comparative example |
| 30 | 5 | 3.9 | 1.3 | 33.3 | 723 | 693 | 280 | 2300 | Comparative example |
| 31 | 7 | 4.9 | 1.8 | 36.7 | 719 | 667 | 279 | 2300 | Comparative example |
| 32 | 17 | 4.3 | 1.2 | 27.9 | 712 | 659 | 255 | 2250 | Comparative example |
| 33 | 18 | 4.1 | 1.1 | 26.8 | 700 | 639 | 280 | 2200 | Comparative example |
| 34 | 19 | 4.7 | 1.3 | 277 | 711 | 644 | 269 | 2250 | Comparative example |
| 35 | 1 | 13.5 | 3.2 | 23.7 | 723 | 551 | 265 | 2288 | Comparative example |
| 36 | 1 | 27.3 | 3.3 | 12.1 | 733 | 553 | 273 | 2400 | Comparative example |
| 37 | 1 | 18.9 | 3.3 | 17.5 | 791 | 727 | 262 | 2350 | Comparative example |
| 38 | 1 | 5.3 | 2.2 | 41.5 | 713 | 665 | 273 | 2300 | Comparative example |

| No. | Steel sample No. | Properties (after nitrocarburizing treatment) | | | | | | | Remarks |
|---|---|---|---|---|---|---|---|---|---|
| | | Compound layer thickness ($\mu$m) | Porous layer thickness ($\mu$m) | Ratio of porous layer thickness to compound layer thickness (%) | Hardness HV at 50 $\mu$m | Hardness HV at 400 $\mu$m | Hardness HV at 600 $\mu$m | Fatigue limit strength (MPa) | |
| 39 | <u>22</u> | 5.6 | 1.3 | 23.2 | 722 | 713 | <u>187</u> | 2400 | Comparative example |
| 40 | <u>23</u> | 5.3 | 1.5 | 28.3 | 742 | 706 | 317 | 2350 | Comparative example |
| 41 | <u>24</u> | 6.4 | 1.3 | 203 | 733 | 639 | 315 | 2350 | Comparative example |
| 42 | <u>25</u> | 5.7 | 1.1 | 19.3 | 775 | 687 | 255 | 2450 | Comparative example |
| 43 | <u>26</u> | 5.6 | 1.0 | 179 | 715 | 677 | 313 | 2550 | Comparative example |
| 44 | <u>27</u> | 5.6 | 1.1 | 196 | 737 | 724 | 253 | 2600 | Comparative example |
| 45 | <u>28</u> | 5.2 | 1.3 | 25.0 | <u>569</u> | <u>396</u> | 291 | 2200 | Comparative example |
| 46 | <u>29</u> | 5.6 | 1.1 | 196 | 756 | 661 | 312 | 2450 | Comparative example |
| 47*2 | 30 | - | - | - | 765 | - | 220 | 2400 | Conventional example |

* 1 Underline indicates outside the scope of application.
* 2 Carburizing treatment was performed.

**Claims**

1. Steel comprising a nitride compound layer with a thickness of 5.0 μm to 30.0 μm and a hardened layer in an order from a steel surface to steel inside, wherein

   a thickness of a porous layer on an outermost surface of the nitride compound layer is 3.0 μm or less and 40.0 % or less of a thickness of the nitride compound layer,
   the hardened layer has a hardness of HV600 or more at a position of 50 μm inward from the steel surface, a hardness of HV400 or more at a position from the steel surface to the steel inside of 400 μm, and a hardness of HV250 or more at a position from the steel surface to the steel inside of 600 μm,
   an unhardened portion excluding the nitride compound layer and the hardened layer comprises a chemical composition containing, in mass%,

   C: 0.010 % or more and 0.200 % or less,
   Si: 1.00 % or less,
   Mn: 0.50 % or more and 3.00 % or less,
   P: 0.020 % or less,
   S: 0.020 % or more and 0.060% or less, and
   Cr: 0.30 % or more and 3.00 % or less,
   with the balance being Fe and inevitable impurities, and

   the hardened layer comprises a chemical composition with a high N content compared to the unhardened portion.

2. The steel according to claim 1, wherein the chemical composition of the unhardened portion further contains, in mass%, at least one selected from the group consisting of

   Mo: 0.400 % or less,
   V: 0.50 % or less,
   Nb: 0.150 % or less,
   Al: 0.200 % or less,
   W: 0.3 % or less,
   Co: 0.3 % or less,
   Hf: 0.2 % or less,
   Zr: 0.2 % or less,
   B: 0.0100 % or less,
   Cu: 0.3 % or less,
   Ni: 0.3 % or less,
   Pb: 0.2 % or less,
   Bi: 0.2 % or less,
   Zn: 0.2 % or less,
   Sn: 0.2 % or less,
   Sb: 0.0200 % or less, and
   N: 0.0200 % or less.

3. A steel component made of the steel according to claim 1 or 2.

4. The steel component according to claim 3, wherein the steel component is a toothed component and has the compound layer at least in a surface layer of a tooth portion.

# FIG. 1

*FIG. 2*

```
        ┌─────────────────┐
        │     Melting     │  ┐
        └─────────────────┘  │
                 │           │
        ┌─────────────────┐  │
        │     Rolling     │  ├ S1
        └─────────────────┘  │
                 │           │
        ┌─────────────────┐  │
        │    Shipping     │  ┘
        └─────────────────┘
                 │
        ┌─────────────────┐
        │  Transporting   │  ├ S2
        └─────────────────┘
                 │
        ┌─────────────────┐  ┐
        │    Receiving    │  │
        └─────────────────┘  │
                 │           │
        ┌─────────────────┐  │
        │     Cutting     │  │
        └─────────────────┘  │
             ╱       ╲       │
   ┌──────────────┐ ┌──────────────┐
   │ Hot forging  │ │ Cold forging │  ├ S3
   └──────────────┘ └──────────────┘
             ╲       ╱       │
        ┌─────────────────┐  │
        │  Cutting work   │  │
        └─────────────────┘  │
                 │           │
        ┌─────────────────┐  │
        │ Nitrocarburizing│  │
        │    treatment    │  │
        └─────────────────┘  │
                 │           │
        ┌─────────────────┐  │
        │    Product      │  ┘
        └─────────────────┘
```

**INTERNATIONAL SEARCH REPORT**

| | International application No. |
|---|---|
| | PCT/JP2021/018686 |

**A. CLASSIFICATION OF SUBJECT MATTER**
C21D 9/32(2006.01)i; C22C 38/00(2006.01)i; C22C 38/60(2006.01)i; C21D 1/06(2006.01)i; C23C 8/26(2006.01)i; C23C 8/32(2006.01)i
FI:    C23C8/32; C22C38/60; C21D1/06 A; C21D9;32 A; C22C38/00 301N; C23C8/26; C22C38/00 301Z

According to International Patent Classification (IPC) or to both national classification and IPC

**B. FIELDS SEARCHED**

Minimum documentation searched (classification system followed by classification symbols)
C23C8/00-C23C8/80; C22C38/00-C22C38/60

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 11-100655 A (TOYOTA MOTOR CORP.) 13 April 1999 (1999-04-13) paragraphs [0021]-[0035], fig. 1-4 | 1-4 |
| Y | WO 2011/013559 A1 (NIPPON PARKERIZING CO., LTD.) 03 February 2011 (2011-02-03) paragraphs [0027]-[0071], fig. 1-4 | 1-4 |
| Y | JP 2015-218359 A (NIPPON STEEL & SUMITOMO METAL CORPORATION) 07 December 2015 (2015-12-07) paragraphs [0058]-[0064] | 1-4 |
| Y | WO 2017/043594 A1 (NIPPON STEEL & SUMITOMO METAL CORPORATION) 16 March 2017 (2017-03-16) paragraphs [0125]-[0155] | 1-4 |

☐ Further documents are listed in the continuation of Box C.   ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 July 2021 (07.07.2021) | 20 July 2021 (20.07.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

| International application No. |
|---|
| PCT/JP2021/018686 |

| Patent Documents referred in the Report | Publication Date | Patent Family | Publication Date |
|---|---|---|---|
| JP 11-100655 A | 13 Apr. 1999 | (Family: none) | |
| WO 2011/013559 A1 | 03 Feb. 2011 | JP 2011-32536 A | |
| JP 2015-218659 A | 07 Dec. 2015 | (Family: none) | |
| WO 2017/043594 A1 | 16 Mar. 2017 | US 2018/0245195 A1 paragraphs [0155]-[0187] KR 10-2018-0019685 A CN 107849679 A EP 3360984 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0559488 A
- JP 2002069572 A
- JP 2010163671 A
- JP 6388075 B